# EUROPÄISCHE PATENTANMELDUNG

(11) **EP 3 106 729 A1**
(43) Veröffentlichungstag der Anmeldung: **21.12.2016**
(21) Anmeldenummer: 16172352.3
(22) Anmeldetag: 01.06.2016
(51) Int. Cl.: F16L 11/15, F16L 55/00

(54) **SCHLAUCHSYSTEM**

(30) Priorität: 19.06.2015 DE 102015109850
(71) Anmelder: Witzenmann GmbH, 75175 Pforzheim (DE)
(72) Erfinder: Pluschke, Michael, 75305 Neuenbürg (DE); Bahr, Mathias, 70597 Stuttgart (DE)
(74) Vertreter: Lemcke, Brommer & Partner Patentanwälte Partnerschaft mbB

(57) **Zusammenfassung**

Vorgeschlagen wird ein Schlauchsystem mit einem druckstabilen, flexiblen Metallschlauch (2), insbesondere Wellschlauch (3), und einer Sicherungseinrichtung, die sich im Wesentlichen über eine gesamte Länge des Metallschlauchs (2) erstreckt und dazu ausgebildet ist, im Falle eines Versagens des Metallschlauches (2) unkontrollierte Bewegungen desselben zu verhindern, welches sich dadurch auszeichnet, dass die Sicherungseinrichtung den Metallschlauch (2) im Wesentlichen über dessen Länge umschließt oder von diesem umschlossen ist und so ausgebildet ist, dass sie, im Falle eines Versagens des Metallschlauchs (2), ein definiertes Entweichen eines unter Druck stehenden Mediums, das aus einem Leck im Metallschlauch (2) strömt, zulässt.

## Beschreibung

Die Erfindung betrifft ein Schlauchsystem mit einem druckstabilen, flexiblen Metallschlauch, insbesondere einem Wellschlauch, und einer Sicherungseinrichtung, die im Wesentlichen entlang einer gesamten Länge des Metallschlauchs verläuft und dazu ausgebildet ist, im Falle eines Lecks im Metallschlauch unkontrollierte Bewegungen desselben zu verhindern.

Es ist bekannt, Metallschläuche für Hochdruckanwendungen, insbesondere für das Betanken einer Rakete oder das Bedrücken (Befüllen) von Gasflaschen, mit einer Sicherungsvorrichtung zu versehen, die im Fall einer Leckage der Schlauchleitung Schäden durch unkontrollierte Bewegungen des Metallschlauchs im Raum verhindern soll.

Bei einer bekannten Bauform ist die Sicherungsvorrichtung durch ein Seil gebildet, das entlang des Metallschlauchs an dessen Außenseite verläuft und an mehreren Befestigungsstellen punktuell mit dem Metallschlauch verbunden ist. Hierbei ist das Seil mittels Klemmen, sogenannten Zwei-Ohr-Klemmen, mit dem Metallschlauch verbunden. Die Verbindung von Seil und Metallschlauch erfolgt hierbei durch Verpressung der Klemmen.

Als nachteilig erweist sich hierbei, dass die Verbindung des Seils mit dem Metallschlauch durch solche Zwei-Ohr-Klemmen nicht ausreichend prozesssicher ist. Insbesondere kann es bei der Verpressung dazu kommen, dass bei einer zu starken Verpressung der Metallschlauch beschädigt wird, während sich das Seil bei einer zu schwachen Verpressung lösen oder sich gegenüber dem Metallschlauch verschieben kann, so dass dieser von dem Seil nicht ausreichend gesichert ist.

Der Erfindung liegt daher die Aufgabe zugrunde, ein verbessertes Schlauchsystem anzugeben, das eine prozesssichere Sicherung des Metallschlauchs ermöglicht.

Die Aufgabe wird gelöst durch ein Schlauchsystem mit den Merkmalen des Anspruchs 1. Vorteilhafte Weiterbildungen ergeben sich aus den abhängigen Ansprüchen.

Ein weiterer Aspekt der Erfindung betrifft eine vorteilhafte Verwendung des Schlauchsystems.

Erfindungsgemäß wird bei einem Schlauchsystem der eingangs beschriebenen Art die Aufgabe dadurch gelöst, dass die Sicherungseinrichtung den Metallschlauch im Wesentlichen über dessen Länge umschließt oder von diesem umschlossen ist, und dass die Sicherungseinrichtung derart ausgebildet ist, dass sie, im Falle eines Versagens des Metallschlauchs, ein definiertes Entweichen eines unter Druck stehenden Mediums, das aus einem Leck im Metallschlauch strömt, zulässt.

Die mit der Erfindung erzielten Vorteile bestehen darin, dass die Sicherungseinrichtung nicht nur punktuell an dessen Außenseite mit dem zu sichernden Metallschlauch verbunden ist, sondern diesen im Wesentlichen über dessen Länge umschließt bzw. von diesem umschlossen ist, woraus sich die Sicherungswirkung der Sicherungseinrichtung gegenüber dem Stand der Technik verbessert.

Bei einer vorteilhaften Ausführungsform ist das Schlauchsystem mit endständigen Anschlussstücken versehen. Die Sicherungseinrichtung ist hierbei endseitig jeweils mit dem betreffenden Anschlussstück verbunden bzw. verbindbar. Diese Ausgestaltung dient der Erweiterung des Schlauchsystems um weitere Metallschläuche oder dem Anschluss an eine Betankungsanlage oder dgl.

Vorzugsweise sind an den beiden Enden des Metallschlauchs Endhülsen angeordnet, mit denen der Wickelschlauch oder das Sicherungsseil stoffschlüssig verbunden, z.B. verschweißt, oder verpresst werden können. Diese Endhülsen sind wiederum, vorzugsweise durch stoffschlüssiges Verbinden (z.B. Verschweißen) oder Verpressen, fest mit dem Metallschlauch verbunden.

Der Metallschlauch kann zusätzlich über seine Länge von mindestens einer Lage eines Schlauchgeflechts umschlossen sein. Das Schlauchgeflecht dient dem Schutz des Metallschlauchs vor einer mechanischen Beschädigung und einer unzulässigen Zugbelastung. Es ist vorzugsweise so ausgelegt, dass eine hohe Flexibilität des Schlauchsystems gewährleistet bzw. erhalten bleibt.

Bei einer vorteilhaften Ausführungsform ist die Sicherungseinrichtung als Sicherungsseil, das im Inneren des Metallschlauchs angeordnet ist, ausgeführt. Vorzugsweise beträgt der Durchmesser des Sicherungsseils weniger als 5%, vorzugsweise weniger als 1% des Innendurchmessers des Metallschlauchs, sodass die Beeinflussung der Strömungsverhältnisse im Inneren des Metallschlauchs vernachlässigbar gering ist. Vorteilhaft ist weiterhin, dass das Sicherungsseil aufgrund seiner Biegeeigenschaften die Funktionalität, insbesondere die Flexibilität, des Metallschlauchs nicht oder allenfalls unwesentlich beeinträchtigt.

Das Sicherungsseil kann hierbei in Metall, vorzugsweise aus Edelstahl, ausgeführt sein, sodass es eine hohe Druckstabilität aufweist. Ein weiterer Vorteil ist hierbei die geringe chemische Reaktionsfähigkeit des Metalls, insbesondere des Edelstahls, mit in dem Metallschlauch transportierten Medien, insbesondere Gasen, wodurch Degradationsprozesse des Sicherungsseils vermieden oder zumindest stark verringert werden.

Bei einer alternativen Ausführungsform ist die Sicherungseinrichtung als Wickellage ausgeführt, die in Form eines Wickelschlauchs um den Metallschlauch gewickelt ist und letzteren über dessen Länge umschließt. Ein Wickelschlauch weist konstruktionsbedingt Öffnungen auf und ist nicht dicht. Hieraus ergibt sich der Vorteil, dass im Fall einer Leckage des Metallschlauchs das ausströmende Medium, insbesondere ein Gas, kontrolliert durch die Öffnungen im Wickelschlauch entweichen kann.

Bei einer vorteilhaften Weiterbildung weist der Wickelschlauch zusätzlich zu seiner inhärenten Undichtheit noch weitere Öffnungen auf, die ein Entweichen des Leitungsdrucks im Falle eines Versagens des Metallschlauchs gezielt erleichtern. Ein Teil der weiteren Öffnungen kann im Bereich von sich mit Spiel über- und umgreifenden Kanten eines den Wickelschlauch bildenden Bandes ausgebildet sein. So wird auf einfache Weise erreicht, dass das aus einem Leck im Metallschlauch ausströmende, möglicherweise unter großem Druck stehende Medium, insbesondere ein Gas, durch die Wickellage hindurchströmt. Dadurch wird verhindert, dass der äußere Wickelschlauch unter Einfluss des Drucks, der aus einem vorherigen Versagen des Metallschlauchs resultiert, beschädigt wird und seine Sicherungsfunktion verliert.

Die genannten weiteren Öffnungen im Wickelschlauch können z.B. in Form einer Perforation des Wickelschlauchs ausgeführt sein. Alternativ können auch Öffnungsspalten zwischen den einzelnen Windungen des Wickelschlauchs vorgesehen sein, um die Durchlässigkeit für das aus dem Metallschlauch im Fall einer Leckage ausströmende Medium zu erhöhen.

Darüber hinaus ist es vorteilhaft, wenn zwischen Wickelschlauch und Metallschlauch ein ringförmiger Spalt vorhanden ist. Durch diese Ausführungsform wird eine bessere räumliche Verteilung des im Bereich eines Lecks im Metallschlauch ausströmenden Mediums erzielt. Damit geht eine Reduktion des Widerstands einher, den der Wickelschlauch für das ausströmende Gas darstellt.

Wie der Metallschlauch selbst, kann auch die Wickellage in Metall, vorzugsweise in Edelstahl, ausgeführt sein.

Der Wickelschlauch kann endseitig mit dem Metallschlauch verbunden sein, sodass der Wickelschlauch sich nicht vom Metallschlauch lösen kann und daher keine zusätzlichen Haltevorrichtungen benötigt werden.

Bei einer vorteilhaften Weiterbildung ist radial zwischen dem Schlauchgeflecht und dem Wickelschlauch zumindest abschnittweise eine Zwischenschicht angeordnet. Diese Schicht kann in Form einer Blähmatte ausgebildet sein, vorzugsweise aus Aluminiumsilikat. Die Blähmatte vergrößert ihre radiale Ausdehnung, wenn sie eine Temperaturerhöhung erfährt, insbesondere durch ein durch den Metallschlauch strömendes Medium. Diese einmalige, irreversible Ausdehnung erzeugt eine radial nach außen wirkende Kraft auf den Wickelschlauch, wodurch dieser fixiert ist. Ein weiterer Vorteil der Blähmatte als Zwischenschicht ist, dass sie als Isolationsschicht wirken kann. Damit soll auf der einen Seite ein unerwünschter Wärmetransport aus dem Inneren des Metallschlauchs heraus verhindert und das Medium dadurch vor Auskühlung geschützt werden. Auf der anderen Seite soll auch der Temperaturgradient im Metallschlauch selbst, der eine thermische Belastung des Materials darstellt, verringert werden.

Die Zwischenschicht kann, wenigstens in Teilbereichen, zusätzlich oder alternativ als Federelement, vorzugsweise als ein umlaufender, gewellter Federring, ausgebildet sein. Das Federelement bzw. der Federring ist derart bemessen und ausgebildet, dass seine Federkraft eine radial nach außen wirkende Kraft auf den Wickelschlauch ausüben und, wie zuvor bezüglich der Blähmatte beschrieben, eine Fixierung des Wickelschlauchs bewirken kann. Es sind auch eine beliebige Kombinationen von Blähmatten-Abschnitten und Federelementen als Zwischenschicht realisierbar.

Vorzugsweise weist das Sicherungsseil an wenigstens einem Ende eine stoffschlüssige Festlegung an wenigstens einem der Anschlussstücke auf. Diese Festlegung kann dadurch erfolgen, dass das Sicherungsseil an einem oder beiden Enden radial nach außen gegen das betreffende Anschlussstück gebogen und mit dem/den Anschlussstück(en) verschweißt ist, vorzugsweise durch Punktschweißen. Hierdurch erlangt das Sicherungsseil die für seine Sicherungsfunktion notwendige stoffschlüssige Verbindung mit den Endbereichen des Schlauchsystems.

In einer alternativen Ausgestaltungsform ist das Sicherungsseil an wenigstens einem Ende in wenigstens einer umfangsseitigen Lasche verpresst, welche Lasche das Sicherungsseil vorzugsweise über einen (Groß-)Teil seines Umfangs umgibt. Die Lasche wiederum weist eine stoffschlüssige Fixierung, vorzugsweise durch Punktschweißen, an wenigstens einem der Anschlussstücke auf. Vorteilhaft gestaltet sich hierbei, dass das Sicherungsseil durchgängig etwa parallel zur Längsachse des Metallschlauchs angeordnet ist und hiermit das Strömungsverhalten des Mediums im Inneren des Metallschlauchs nur unwesentlich beeinflusst wird. Es ist im Rahmen der Erfindung auch möglich, dass das Sicherungsseil an dem einen Ende nach außen gebogen ist und an dem anderen in der beschriebenen Lasche verpresst ist.

Es liegt weiterhin im Rahmen der Erfindung, bei ein und demselben Schlauchsystem beide Sicherheitseinrichtungen, nämlich einen äußeren Wickelschlauch und ein innenliegendes Seil, vorzusehen.

Das erfindungsgemäße Schlauchsystem ist insbesondere - ohne Beschränkung - zur Verwendung im Bereich der Betankung von Flugkörpern der Raumfahrt (Raketen) oder zum Befüllen von Gasflaschen geeignet.

Weitere bevorzugte Merkmale und Ausführungsformen der Erfindung ergeben sich aus der folgenden Beschreibung von Ausführungsbeispielen anhand der Zeichnung.
Fig. 1 zeigt ein Schlauchsystem, teilweise im Längsschnitt, mit einer Sicherungsvorrichtung in Form einer äußeren Wickellage;
Fig. 2 zeigt das Schlauchsystem aus Figur 1 in einem Querschnitt in der Ebene BB;
Fig. 3 zeigt das Schlauchsystem aus Figur 1 in einem Querschnitt in der Ebene CC;
Fig. 4 zeigt ein Schlauchsystem, teilweise im Längsschnitt, mit einer Sicherungsvorrichtung in Form eines innen verlaufenden Seils; und
Fig. 5 zeigt das Schlauchsystem aus Figur 4 in einem Querschnitt in der Ebene DD.

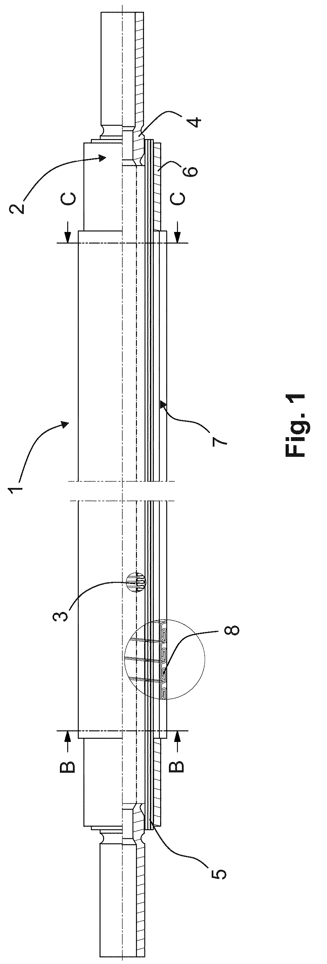

Bei dem in Fig. 1 teilweise im Längsschnitt gezeigten Schlauchsystem 1 ist ein Metallschlauch 2 in Form eines Wellschlauchs 3 ausgeführt. Im Bereich der beiden Enden des Metallschlauchs 2 geht der Wellschlauch 3 jeweils in ein Anschlussstück 4 über, das stoffschlüssig mit dem Wellschlauch 3 verbunden ist. Die Verbindung der beiden Anschlussstücke 4 mit dem Wellschlauch 3 erfolgt durch Verschweißen.

Um den Wellschlauch 3 herum ist ein Schlauchgeflecht oder Geflechtschlauch 5 angeordnet, das bzw. der aus drei Lagen besteht und den Wellschlauch 3 über dessen gesamte Länge umhüllt. Zusätzlich umhüllt das Schlauchgeflecht 5 die beiden Anschlussstücke 4 über einen Teil ihrer Länge. Aufgabe des Schlauchgeflechts 5 ist es, die unter einem inneren Druck auftretende Dehnung des Wellschlauchs 3 in axialer Richtung zu begrenzen und den Wellschlauch gegen Schadeinwirkung von außen zu schützen. Dabei wird die Flexibilität des Wellschlauchs 3 durch das Schlauchgeflecht 5 nur in vernachlässigbarem Umfang beeinträchtigt.

Endseitig ist das Schlauchgeflecht 5 jeweils von einer Endhülse 6 umhüllt. Diese Endhülsen sind in den Bereichen, in denen die Anschlussstücke 4 sowie das Schlauchgeflecht 5 übereinander angeordnet sind, radial verpresst. Hierdurch entsteht in diesen Bereichen eine kraftschlüssige Verbindung zwischen den Endhülsen 6, dem Schlauchgeflecht 5 und den Anschlussstücken 4. Damit wird ein Heruntergleiten des Schlauchgeflechts 5 vom Wellschlauch 3 verhindert.

Angrenzend an diejenigen Bereiche, in denen das Schlauchgeflecht 5 von den beiden Endhülsen 6 umhüllt ist, ist ein Wickelschlauch 7 angeordnet, welcher das Schlauchgeflecht 5 und damit auch den darunter liegenden Wellschlauch 3 über einen Großteil seiner Länge umhüllt. Aufgabe des Wickelschlauchs 7 ist es, den Wellschlauch 3 im Fall einer Leckage vor unkontrollierten Bewegungen zu schützen. Weiterhin weist der Wickelschlauch 7 immanente Öffnungen (nicht dargestellt) zwischen den einzelnen Windungen 8 auf. Dadurch wird die Durchlässigkeit für ein aus dem Wellschlauch 3 im Fall einer Leckage ausströmendes Medium erhöht, sodass der Wickelschlauch 7 für den Druck des ausströmenden Mediums nur einen kleinen Widerstand darstellt und eine Schädigung des Wickelschlauchs 7 verhindert wird. Zusätzlich kann der Wickelschlauch 7 noch weitere Öffnungen (nicht gezeigt) ausweisen, z.B. durch Perforierung des Metallbandes, aus dem der Wickelschlauch 7 gewickelt wurde.

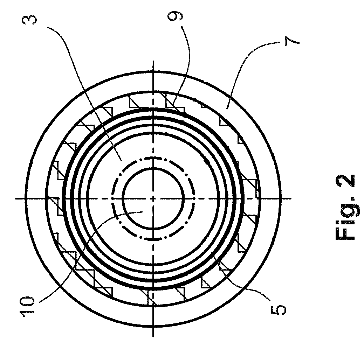

Radial zwischen dem Schlauchgeflecht 5 und dem Wickelschlauch 7 ist, gegebenenfalls nur in Abschnitten, eine Zwischenschicht 9 angeordnet. Diese Zwischenschicht 9 ist dazu ausgebildet und vorgesehen, von innen eine radial nach außen wirkende Kraft auf den Wickelschlauch 7 auszuüben. Sie kann, wie in Figur 2 dargestellt, in Form einer Blähmatte, bevorzugt aus Aluminiumsilikat, ausgestaltet sein. Diese erhöht bei Erwärmung irreversibel ihre (radiale) Ausdehnung - beispielsweise, wenn die Temperatur des durch die Durchtrittsöffnung 10 des Wellschlauchs 3 strömenden Mediums steigt. Durch die radiale Ausdehnung wird folglich eine radial nach außen wirkende Kraft auf den Wickelschlauch 7 erzeugt. Dadurch ist eine Fixierung des Wickelschlauchs 7 bewirkt und insbesondere die Gefahr eines axialen Verrutschens minimiert. Ein weiterer Vorteil der Blähmatte ist es ihre isolierende Wirkung. Hierdurch werden etwaige große Temperaturgradienten im Wellschlauch 3 bzw. dem Schlauchgeflecht 5 verringert und der Gefahr einer übermäßigen thermischen Beanspruchung der Systemteile bzw. einem Wärmeverlust vorgebeugt.

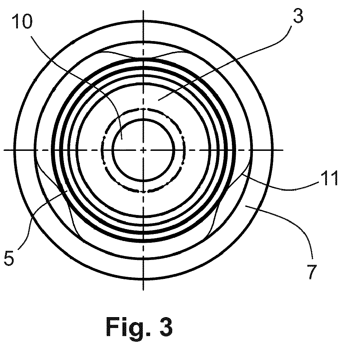

Eine Variante in der Ausgestaltung der Zwischenschicht 9 ist in Figur 3 dargestellt. Hier ist ein umlaufender, gewellter Federring 11 zwischen dem Schlauchgeflecht 5 und dem Wickelschlauch 7 angeordnet. Die Rückstellkraft des Federrings 11 ist derart bemessen, dass sie eine ausreichend große radiale Kraft auf den Wickelschlauch 7 bewirkt, um den zuvor beschriebenen Vorteil der axialen Fixierung zu erzielen. Dabei kann es sich nicht nur um einen einzigen Federring, sondern auch um eine Kombination mehrerer Federringe handeln.

Die beiden zuvor beschriebenen Varianten der Zwischenschicht 9 können einzeln und getrennt sowie gemeinsam in nahezu beliebiger Kombination realisiert sein.

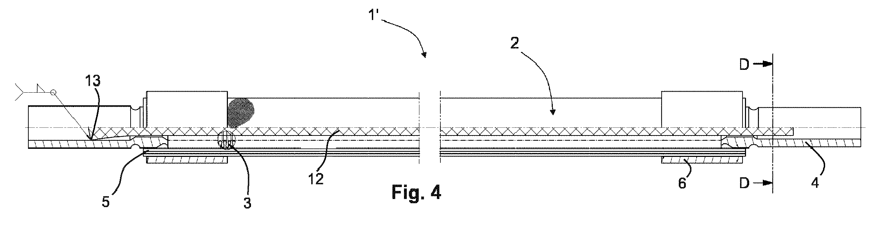

In Figur 4 ist ein Längsschnitt eines alternativen Schlauchsystems 1' gezeigt, wobei nur auf die Unterschiede zur Ausgestaltung gemäß Fig. 1 näher eingegangen wird.

Der in Figur 4 gezeigte Metallschlauch 2 hat dieselbe Funktion wie der Metallschlauch 2 in Figur 1. Auch die Anschlussstücke 3 können dieselben sein wie bei der Ausgestaltung in Figur 1. Im Inneren des Metallschlauchs 2, welcher wiederum in Form eines Wellschlauchs 3 ausgeführt ist, verläuft ein Sicherungsseil 12. Dieses ist endständig an den Anschlussstücken 4 festgelegt. Das Sicherungsseil 12 ist vorzugsweise aus einem zug- und druckstabilen Material gefertigt, beispielsweise Edelstahl, und weist eine geringe chemische Reaktionsfähigkeit auf.

In dem einen Endbereich ist das Sicherungsseil 12 über eine Punktschweißung 13 oder anderweitig stoffschlüssig mit dem Anschlussstück 4 verbunden. Das Sicherungsseil 12 ist dabei in der in Figur 4 gezeigten Ausführungsform radial nach außen umgebogen, an das Anschlussstück 4 angelegt und dort fixiert. Es ist aber alternativ möglich, dass einzelne Fasern des Sicherungsseils 12 aufgespreizt und an mehreren Punkten umfänglich stoffschlüssig mit dem Anschlussstück 4 verbunden sind.

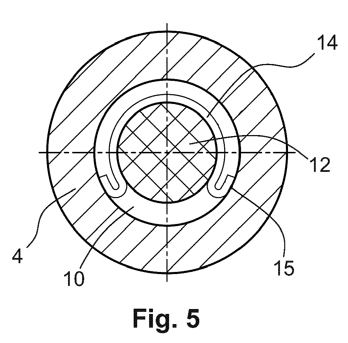

In dem anderen Endbereich ist das Sicherungsseil 12 in eine umfangsseitige Lasche 14 verpresst (wie in Figur 5 dargestellt). Diese Lasche 14 ist wiederum mittels einer Punktschweißung 15 oder anderweitig stoffschlüssig mit dem Anschlussstück 4 verbunden. Beide Verbindungsarten, sowohl in dem einen als auch in dem anderen Endbereich, bewirken eine sichere Verbindung des Sicherungsseils 12 mit den Anschlussstücken 4, sodass das Sicherungsseil 12 seine Funktion als Sicherungsvorrichtung erfüllen kann. Schäden durch unkontrollierte Bewegungen des Metallschlauchs 2 im Raum können dadurch vermieden werden.

Durch den Raum 10 zwischen dem Sicherungsseil 12 und dem Anschlussstück 4 bzw. strömt das Medium. Die Lasche 14 weist in axialer Richtung nur eine geringe Ausdehnung auf, sodass ihr Widerstand für das strömende Medium nur geringfügig ausfällt und damit nicht nachteilig ist.

Die Ausführungsformen gemäß Figur 4 und Figur 5 können alternativ oder in Kombination bei einem Schlauchsystem realisiert sein.

## Patentansprüche

1. Schlauchsystem (1, 1') mit einem druckstabilen, flexiblen Metallschlauch (2), insbesondere Wellschlauch (3), und einer Sicherungseinrichtung, die sich im Wesentlichen über eine gesamte Länge des Metallschlauchs (2) erstreckt und dazu ausgebildet ist, im Falle eines Versagens des Metallschlauches (2) unkontrollierte Bewegungen desselben zu verhindern,
**dadurch gekennzeichnet, dass**
die Sicherungseinrichtung den Metallschlauch (2) im Wesentlichen über dessen Länge umschließt oder von diesem umschlossen ist und so ausgebildet ist, dass sie, im Falle eines Versagens des Metallschlauchs (2), ein definiertes Entweichen eines unter Druck stehenden Mediums, das aus einem Leck im Metallschlauch (2) strömt, zulässt.

2. Schlauchsystem (1, 1') nach Anspruch 1, welches Schlauchsystem (1, 1') mit Anschlussstücken (4) versehen ist, um eine Erweiterung des Schlauchsystems (1, 1') um weitere Schlauchsysteme (1, 1') oder den Anschluss an eine Betankungsanlage oder dergleichen zu ermöglichen.

3. Schlauchsystem (1, 1') nach Anspruch 1 oder 2, bei dem an wenigstens einem Ende, vorzugsweise an den beiden Enden, des Metallschlauchs (2) eine Endhülse (6) angeordnet ist.

4. Schlauchsystem (1, 1') nach einem der Ansprüche 1 bis 3, bei dem mindestens eine Lage eines Schlauchgeflechts (5) den Metallschlauch (2) über dessen Länge umschließt.

5. Schlauchsystem (1') nach einem der Ansprüche 1 bis 4, bei dem die Sicherungseinrichtung als Sicherungsseil (12) ausgeführt ist, das im Inneren des Metallschlauchs (2) angeordnet ist, welches Sicherungsseil (12) vorzugsweise in Metall, höchst vorzugsweise Edelstahl, ausgeführt ist.

6. Schlauchsystem (1) nach einem der Ansprüche 1 bis 4, bei dem die Sicherungseinrichtung als Wickellage ausgeführt ist, die den Metallschlauch (2) in Form eines Wickelschlauchs (7) im Wesentlichen über dessen Länge umschließt.

7. Schlauchsystem (1) nach Anspruch 6, bei dem der Wickelschlauch (7) derart ausgebildet ist, dass er Öffnungen aufweist, die ein Entweichen eines unter Druck stehenden Mediums im Falle eines Lecks des Metallschlauchs (2) aus demselben ermöglichen, wobei vorzugsweise zumindest ein Teil der Öffnungen im Bereich von sich mit Spiel über- und umgreifenden Kanten eines den Wickelschlauch (7) bildenden Bandes ausgebildet sind.

8. Schlauchsystem (1) nach Anspruch 7, bei dem zumindest ein Teil der Öffnungen durch eine Perforierung des Wickelschlauchs (7) gebildet sind.

9. Schlauchsystem (1) nach einem der Ansprüche 6 bis 8, bei der zwischen dem Wickelschlauch (7) und dem Metallschlauch (2) ein ringförmiger Spalt vorhanden ist.

10. Schlauchsystem (1) nach einem der Ansprüche 6 bis 9, bei der der Wickelschlauch (7) endseitig mit dem Metallschlauch (2) verbunden ist, vorzugsweise im Bereich der wenigstens einen Endhülse (6) gemäß Anspruch 3.

11. Schlauchsystem (1) nach einem der Ansprüche 6 bis 10, bei der der Wickelschlauch (7) als metallischer Wickelschlauch (7), vorzugsweise in Edelstahl, ausgeführt ist.

12. Schlauchsystem (1) nach einem der Ansprüche 6 bis 11, bei dem radial zwischen dem Schlauchgeflecht (5) gemäß Anspruch 4 und dem Wickelschlauch (7) eine Zwischenschicht (9) angeordnet ist.

13. Schlauchsystem (1) nach Anspruch 12, bei dem die Zwischenschicht (9) als eine Blähmatte, vorzugsweise aus Aluminiumsilikat, oder als ein Federelement, vorzugsweise ein umlaufender, gewellter Federring (11), oder als eine Kombination von Blähmatte und Federelement ausgebildet ist.

14. Schlauchsystem (1') nach einem der Ansprüche 5 oder 6, bei dem das Sicherungsseil (12) an wenigstens einem Ende eine stoffschlüssige Festlegung aufweist, vorzugsweise an wenigstens einem der Anschlussstücke (4) gemäß Anspruch 2, und/oder bei dem das Sicherungsseil (12) an wenigstens einem Ende in wenigstens einer umfangsseitigen Lasche (14) verpresst ist, welche Lasche (14) vorzugsweise eine stoffschlüssige Fixierung, höchst vorzugsweise durch Punktschweißen, an wenigstens einem der Anschlussstücke (4) gemäß Anspruch 2 aufweist.

15. Verwendung des Schlauchsystems (1, 1') nach einem der vorangegangenen Ansprüche als Teil einer Hochdruckbetankungsleitung zum Befüllen von Gasflaschen oder zum Betanken von Raketen.
